Europäisches Patentamt

European Patent Office

Office européen des brevets

(19)

(11) Veröffentlichungsnummer: **0 278 071**
**A1**

## (12) EUROPÄISCHE PATENTANMELDUNG

(21) Anmeldenummer: 87116904.1

(22) Anmeldetag: 17.11.87

(51) Int. Cl.⁴: **F02B 27/00 , F02M 35/10**

(30) Priorität: 31.01.87 DE 3702902

(43) Veröffentlichungstag der Anmeldung:
**17.08.88 Patentblatt 88/33**

(84) Benannte Vertragsstaaten:
**DE ES FR GB IT SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Rutschmann, Erwin, Dipl.-Ing.**
**Schoenblickstrasse 21**
**D-7533 Tiefenbronn(DE)**
Erfinder: **Schneider, Klaus, Dipl.-Ing.**
**Tiefenbronner Strasse 28**
**D-7533 Tiefenbronn-Mühlhausen(DE)**

(54) **Saugrorhanlage für einen Hubkolbenmotor.**

(57) Eine Saugrohranlage für einen Boxer oder V-Motor besteht aus einem U-förmigen Sammelsaugrohr (4), an dessen beiden U-Schenkeln (5, 6) Einzelsaugrohre (R1-R6) zu den beiden Zylinderreihen (2, 3) angebracht sind. Mittig zwischen den U-Schenkeln (5, 6) ist ein in gleicher Richtung weisender Saugstutzen (8) angebracht. Um einen optimalen Aufladeeffekt zu erzielen, beträgt die gestreckte Länge des Sammelsaugrohres das doppelte der gestreckten Länge des eines als Raumkrümmer gestalteten Einzelsaugrohres.

FIG.1

EP 0 278 071 A1

## Saugrohranlage für einen Hubkolbenmotor

Die Erfindung betrifft eine Saugrohranlage für einen Mehrzylinder-Hubkolbenmotor nach dem Oberbegriff des Anspruchs 1.

Eine aus DE-OS 34 08 898 bekannte Luftansauganlage für einen Hubkolbenmotor, dessen Zylinder in zwei Reihen angeordnet sind, besteht aus einem I-förmigen Verteilerstück, das aus zwei annähernd gleich großen Resonanzbehältern und einem Verbindungsrohr zusammengesetzt ist. Durch eine gezielte Abstimmung des Volumens und der freien Querschnitte der Luftansauganlage wird eine Schwingaufladung des Hubkolbenmotors und damit eine Erhöhung des Motor-Drehmoments erreicht. Unbefriedigend ist allerdings die für die Abstimmung nötige große Baulänge des Verbindungsrohres, die eine Verwendung dieser Luftansauganlage bei V-Motoren mit kleinem V-Winkel erschwert.

Es ist die Aufgabe der Erfindung, eine zwischen zwei Zylinderreihen eines Hubkolbenmotors einzubauende Saugrohranlage so zu gestalten und zu bemessen, daß sie einerseits eine Schwingaufladung des Motors ermöglicht, andererseits eine kleine Baulänge aufweist.

Zur Lösung dieser Aufgabe dienen die kennzeichnenden Merkmale des Anspruchs 1.

Wenn die Saugrohranlage als ein in Querschnitt U-förmiges Sammelsaugrohr annähernd konstanten Querschnitts gestaltet ist, herrschen an alle Stellen stationär betrachtet gleiche Drücke-und Geschwindigkeiten. Zur Erzielung eines gasdynamischen Aufladeeffekts müssen nur noch das Volumen des Sammelsaugrohres und seine Länge auf die Länge der Einzelsaugrohre abgestimmt werden, die von den beiden U-Schenkeln ausgehen und zu den beiden Zylinderreihen führen. Die U-Schenkel sind als Ersatz für die bisher bekannten Resonanzbehälter zu betrachten; sie sind im Querschnitt gleich groß wie der sie verbindende Steg. Zur Schwingaufladung pulsiert der Luftstrom zwischen den beiden U-Schenkeln einerseits sowie zwischen den U-Schenkeln und den Einlaßventilen der zugehörigen Zylinderreihe. Ein optimaler Aufladeeffekt ergibt sich, wenn die gestreckte Länge des Sammelsaugrohres etwa doppelt so groß ist wie die gestreckte Länge eines Einzelsaugrohres. Die Einzelsaugrohre sind als Raumkrümmer so geformt, daß sie alle etwa einen gleich großen Durchflußwiderstand aufweisen.

Ein Ausführungsbeispiel der Erfindung ist in der Zeichnung dargestellt und wird nachfolgend erläutert.

Es zeigt:

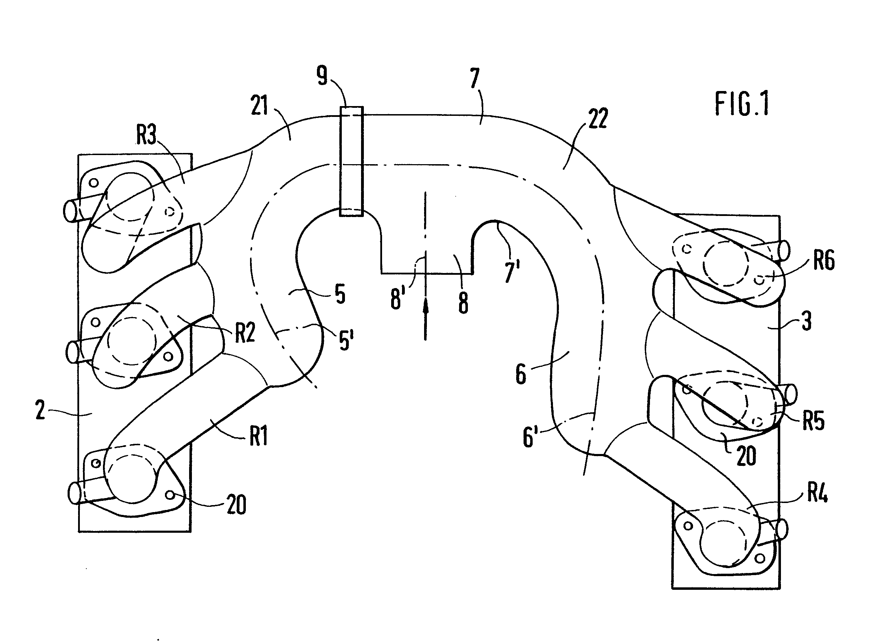

Fig. 1 Draufsicht auf die Saugrohranlage,

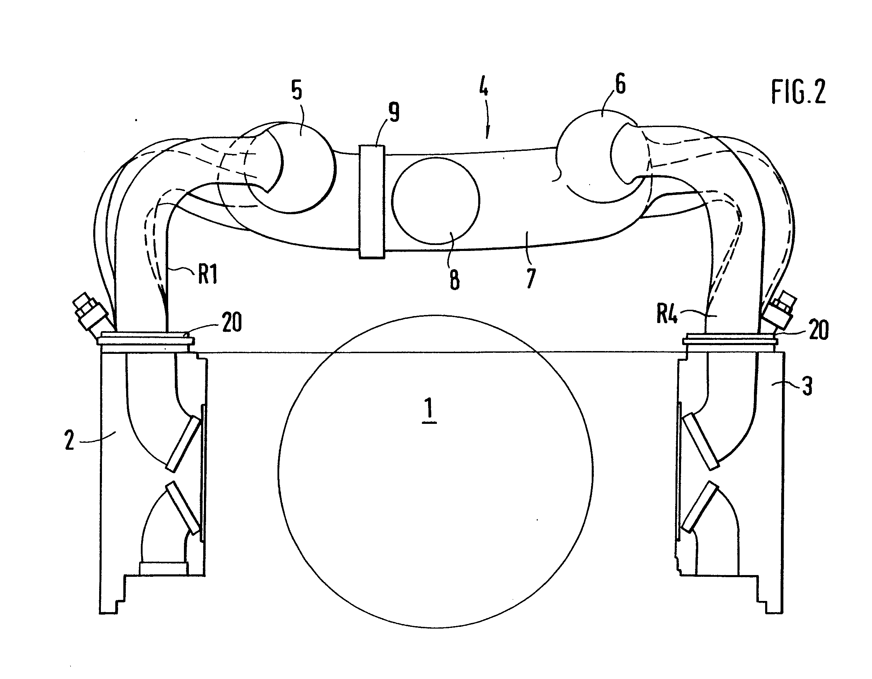

Fig. 2 Seitenansicht der Saugrohranlage

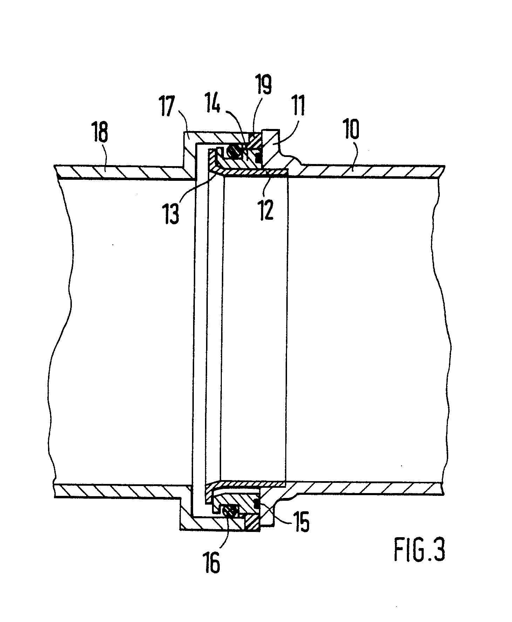

Fig. 3 Längsschnitt an der Trennstelle eines U-Schenkels.

Eine aus Leichtmetallrohren geschweißte Saugrohranlage zum Verteilen der Ansaugluft ist oberhalb eines Boxermotors 1, mittig zwischen dessen linker Zylinderreihe 2 und rechter Zylinderreihe 3 angeordnet. Die Saugrohranlage besteht aus einem in der Draufsicht U-förmigen Sammelsaugrohr 4 mit einem linken U-Schenkel 5, einem rechten U-Schenkel 6 und einem sie verbindenden Steg 7. Etwa mittig zwischen den beiden Schenkeln 5 und 6 ist senkrecht am Steg 7 ein Saugstutzen 8 angeschweißt, über den die Ansaugluft in das Sammelsaugrohr 4 eintritt.

An der Außenseite des linken U-Schenkels 5 sind die Einzelsaugrohre R1, R2, R3, an der Außenseite des rechten U-Schenkels 6 die Einzelsaugrohre R4, R5, R6 stumpfwinklig zu den Rohrachsen 5' und 6' der U-Schenkel angeschweißt, die alle als Raumkrümmer mit annähernd gleicher gestreckter Länge gestaltet sind und mit ihren Anschlußflanschen (20) an den Zylinderköpfen der beiden Zylinderreihen 2 und 3 angeschraubt sind.

Der freie Querschnitt des Sammelsaugrohres 4 ist an allen Stellen etwa gleich groß und etwa gleich dem 1,2-fachen der Summe der Querschnitte der an einem U-Schenkel angeschlossenen Einzelsaugrohre.

Um Fertigungstoleranzen des Motors und temperaturbedingte Längenänderungen der Saugrohranlage ausgleichen zu können, ist zwischen dem Steg 7 und dem linken U-Schenkel 5 eine abgedichtete Trennstelle 9 vorgesehen. Hierzu schließt das eine Schenkelteil 10 mit einem Endflansch 11 ab. In ihn ist eine Buchse 12 eingepreßt, zwischen deren Bund 13 und dem Endflansch 11 ein Dichtring 14 gehalten ist. Der Dichtring trägt stirnseitig eine Dichtung 15 und am Umfang in einer Ringnut einen O-Ring 16, der gegenüber einer Rohraufweitung 17 des anderen Schenkelteiles 18 abdichtet. Zwischen der Stirnseite der Rohraufweitung 17 und dem Endflansch 11 ist eine Staubdichtung 19 aus Schaumgummi eingelegt.

Der linke U-Schenkel 5 geht mit einem Übergangsbogen 21, der rechte U-Schenkel 6 mit einem Übergangsbogen 22 in den Steg 7 über. Die Einzelsaugrohre R1 bis R6 sind parallel zueinander und tangential zu den Übergangsbogen 21 und 22 an deren Verbindungsstellen mit dem geraden Steg 7 gerichtet.

**Ansprüche**

1. Saugrohranlage für einen Mehrzylinder-Hubkolbenmotor, mit einem Sammelsaugrohr und von ihm abgehenden Einzelsaugrohren zu den in zwei Reihen angeordneten Zylindern, dadurch gekennzeichnet, daß das Sammelsaugrohr (4) U-förmig gestaltet ist, wobei von den U-Schenkeln (5, 6) die Einzelsaugrohre (R1 bis R6) ausgehen und senkrecht an dem die U-Schenkel (5, 6) verbindenden Steg (7) ein Saugstutzen (8) etwa mittig zwischen den U-Schenkeln (5, 6) angebracht ist.

2. Saugrohranlage nach Anspruch 1, dadurch gekennzeichnet, daß der Saugstutzen (8) und die Schenkel (5, 6) an derselben Stegseite (7') angebracht sind.

3. Saugrohranlage nach Anspruch 1 und 2, dadurch gekennzeichnet, daß die Rohrachsen (5', 6') der beiden Schenkel (5, 6) und die Rohrachse (8') des Saugstutzens (8) in einer Horizontalebene liegen.

4. Saugrohranlage nach einem der Ansprüche 1 is 3, dadurch gekennzeichnet, daß die Einzelsaugrohre (R1 bis R6) an den Außenseiten der Schenkel (5, 6) stumpfwinklig zu deren Rohrachsen (5', 6') angebracht sind.

5. Saugrohranlage nach Anspruch 3 und 4, dadurch gekennzeichnet, daß die Einzelsaugrohre (R1 bis R6) als nach unten gebogene Raumkrümmer gestaltet sind und in annähernd horizontalen Anschlußflanschen (20) zum Motor (1) enden.

6. Saugrohranlage nach Anspruch 1 bis 3, dadurch gekennzeichnet, daß die Einzelsaugrohre (R1 bis R6) parallel zueinander liegen und tangential zu den den geraden Steg (7) mit den U-Schenkeln (5, 6) verbindenden Übergangsbogen.

7. Saugrohranlage nach Anspruch 1, dadurch gekennzeichnet, daß das Sammelsaugrohr (4) überall einen etwa gleich großen freien Querschnitt hat.

8. Saugrohranlage nach Anspruch 7, dadurch gekennzeichnet, daß der freie Querschnitt des Sammelsaugrohres (4) das 1,2-fache bis 1,3-fache der Summe der freien Querschnitte der an einem U-Schenkel (5 oder 6) angeschlossenen Einzelsaugrohre (R1 bis R3 oder R4 bis R6) beträgt.

9. Saugrohranlage nach einem der Ansprüche 1 bis 8, dadurch gekennzeichnet, daß der Gesamtströmungsweg von den Anschlußflanschen (20) der zu der einen Zylinderreihe (2) führenden Einzelsaugrohre bis zu den Anschlußflanschen (20) der Einzelsaugrohre der anderen Zylinderreihe (3), durch die nachfolgend angesaugt wird, für alle Einzelsaugrohre (R1 bis R6) etwa gleich groß ist.

10. Saugrohranlage nach einem der Ansprüche 1 bis 9, dadurch gekennzeichnet, daß sie aus Kunststoff gefertigt ist.

11. Saugrohranlage nach einem der Ansprüche 1 bis 9, dadurch gekennzeichnet, daß sie aus Leichtmetallrohren zusammengeschweißt oder gegossen ist.

12. Saugrohranlage nach einem der Ansprüche 1 bis 11, dadurch gekennzeichnet, daß mindestens ein Schenkel (6) des Sammelsaugrohres (4) zum Ausgleich einer Längenänderung und/oder eines Querversatzes eine abgedichtete Trennstelle (9) aufweist.

13. Saugrohranlage nach Anspruch 12, dadurch gekennzeichnet, daß die Trennstelle (9) gebildet ist aus einer Buchse (12), die in den Endflansch (11) des einen Schenkelteiles (10) eingepreßt ist, aus einem am Bund (13) der Buchse (12) und am Endflansch (11) anliegenden Dichtring (14), der mit reichlich Radialspiel auf der Buchse (12) sitzt und in einer Außennut einen O-Ring (16) zur Abdichtung gegenüber einer darübergesteckten Rohraufweitung (17) des anderen Schenkelteiles (18) enthält, sowie einer zwischen der Stirnfläche und dem Endflansch (11) des einen Schenkelteiles (10) eingelegten Staubdichtung (19).

14. Saugrohranlage nach einem der Ansprüche 1 bis 13, dadurch gekennzeichnet, daß das Volumen des Sammelsaugrohres (4) etwa gleich dem Gesamthubvolumen aller Zylinder der Zylinderreihen (2 und 3) ist.

15. Saugrohranlage nach einem der Ansprüche 1 bis 14, dadurch gekennzeichnet, daß die gestreckte Länge des Sammelsaugrohres (4) etwa doppelt so groß ist wie die gestreckte Länge eines Einzelsaugrohres (R1).

FIG.1

FIG.2

0 278 071

AB58 2

FIG.3

Europäisches
Patentamt

**EUROPÄISCHER RECHERCHENBERICHT**

Nummer der Anmeldung

EP 87 11 6904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 135 388 (HONDA) <br> * ganzes Dokument * | 1,3,7, 15 | F 02 B 27/00 <br> F 02 M 35/10 |
| Y |  | 4-6,8-12,14 |  |
|  | --- |  |  |
| X | DE-A-2 930 697 (DAIMLER-BENZ) <br> * Seite 5, Zeile 24 - Seite 7, Zeile 7; Figuren 1-3 * | 1,3,7 |  |
|  | --- |  |  |
| X | US-A-2 916 027 (CHAYNE et al.) <br> * Spalte 1, Zeile 57 - Spalte 3, Zeile 13; Figuren 1, 2 * | 1-3,7, 15 |  |
|  | --- |  |  |
| X | EP-A-0 167 794 (PORSCHE) <br> * Seite 3, Zeile 1 - Seite 4, Zeile 8; Figur 1 * | 1 |  |
|  | --- |  |  |
| Y | A.T.Z. AUTOMOBILTECHNISCHE ZEITSCHRIFT, Band 88, Nr. 5, Mai 1986, Seiten 265-270, Stuttgart;M. BAUTLE et al.: "Der Porsche Typ 959 - Gruppe B - ein besonderes Automobil - Teil 1" <br> * Figuren 2, 4 * | 4-6,8, 14 | RECHERCHIERTE SACHGEBIETE (Int. Cl.4) |
|  | --- |  | F 02 B 27/00 <br> F 02 B 33/44 <br> F 02 M 35/10 |
| Y | EP-A-0 158 008 (PORSCHE) <br> * Seite 1, Zeile 20 - Seite 5, Zeile 15; Figuren 1-3 * & DE - A - 3 408 899 (Kat. D,Y) | 9,11,12 |  |
|  | --- |  |  |
| Y | AUTOMBILTECHNISCHE ZEITSCHRIFT, Band 87, Nr. 10, Oktober 1985, Seiten 519-528, Stuttgart; A. KAPRATH et al.: "Kunststoff-Saugrohre - erste Erfahrungen und Versuchsergebnisse" <br> * Figuren 3-5 * | 10 |  |

-/-

Der vorliegende Recherchenbericht wurde für alle Patentansprüche erstellt

| Recherchenort | Abschlußdatum der Recherche | Prüfer |
|---|---|---|
| BERLIN | 25-04-1988 | NORDSTROEM U.L.N. |

**Europäisches Patentamt**

# EUROPÄISCHER RECHERCHENBERICHT

Nummer der Anmeldung

EP 87 11 6904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | idem<br>--- | 4-6 | |
| A | DE-B-1 231 060 (DAIMLER-BENZ)<br>* Spalte 1, Zeilen 18-50 *<br>--- | 14 | |
| A | EP-A-0 093 845 (PORSCHE)<br>* Seite 3, Zeile 29 - Seite 5, Zeile 12; Figuren 1-3 *<br>--- | 13 | |
| A | GB-A- 532 985 (HEMMINGSEN)<br>* ganzes Dokument *<br>--- | 13 | |
| A | PATENT ABSTRACTS OF JAPAN, Band 10, Nr. 92 (M-468)[2149], 9. April 1986; & JP - A - 60 230508 (MAZDA) 16.11.1985<br>----- | 15 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| BERLIN | 25-04-1988 | NORDSTROEM U.L.N. |